Europäisches Patentamt

(19) European Patent Office

Office européen des brevets

(11) Publication number : **0 441 062 A1**

# (12) EUROPEAN PATENT APPLICATION

(21) Application number : 90314349.3

(22) Date of filing : 27.12.90

(51) Int. Cl.⁵ : **B01D 53/36**

(30) Priority : 27.12.89 JP 336515/89

(43) Date of publication of application :
14.08.91 Bulletin 91/33

(84) Designated Contracting States :
BE DE ES FR GB IT NL SE

(71) Applicant : NIPPON SHOKUBAI KAGAKU
KOGYO CO. LTD.
1-1, Koraibashi, 4-chome
Chuo-ku Osaka-shi Osaka-fu (JP)

(72) Inventor : Muraoka, Shigehisa
368, Kamaya, Mitsu-cho
Ibo-gun, Hyogo-ken (JP)
Inventor : Tsuchitani, Kazuo
1351-70-301 Aoyama
Himeji-shi, Hyogo-ken (JP)

(74) Representative : Rees, David Christopher et al
Kilburn & Strode 30 John Street
London WC1N 2DD (GB)

(54) Method for purification of exhaust gas and apparatus therefor.

(57) A method for the purification of the exhaust gas, which comprises passing the exhaust gas through a catalytic system having disposed on the exhaust gas inlet side a first catalyst produced by depositing a catalytic substance on at least one metallic substrate selected from the group consisting of metal nets and perforated metal sheets and on the exhaust gas outlet side a second catalyst produced by depositing a catalytic substance on a honeycomb shaped monolithic carrier and an apparatus therefor.

EP 0 441 062 A1

## METHOD FOR PURIFICATION OF EXHAUST GAS AND APPARATUS THEREFOR

BACKGROUND OF THE INVENTION

Field of the Invention :

This invention relates to a method for the purification of the exhaust gas from an internal combustion engine and an apparatus to be used therefor. More particularly, it relates to a method for the purification of the exhaust gas from an internal combustion engine which exhibits an excellent purifying performance even at low temperatures and an apparatus therefor which excels in back pressure characteristics and durability.

Description of the Prior Art :

Generally in the catalytic purification of the exhaust gas from an automobile, a three way catalyst capable of simultaneous removal of hydrcarbon (HC), carbon monoxide (CO), and nitrogen oxides (NOx) (hereinafter referred to as "three way performance") is used.

In recent years, the trend of engines toward greater reduction in the fuel economy and with larger output has been urging the development of a catalyst which excels in the performance for purification. Further, the regulation on exhaust gas, particularly on HC, which is stricter than the existing regulation is being put into effect. In these circumstances, the conventional three way catalyst hardly deserves to be called satisfactory in terms of performance.

Heretofore, a catalytic device using a plurality of catalysts for the purpose of fulfilling the desired capacity for the purification of the exhaust gas has been disclosed in JP-A-56-50,716 (1981). The catalytic device of this invention is required to use two honeycomb catalysts and is characterized by giving a greater cell density to the honeycomb used on the inlet side of the device relative to the flow of the exhaust gas than to the honeycomb used on the outlet side. The device, therefore, has the disadvantage that the two catalysts inevitably occupy extra spaces and the operation of this device entails an increased back pressure because of the installation of the two honeycombs different in cell density.

A catalytic converter which has catalytic elements different in catalytic composition disposed one each in the former and latter stages has been disclosed (JP-A-55-164,715 (1980)). This catalytic converter is hardly practicable because it necessitates use of a diffusion chamber between the former and latter catalytic elements and the use of this diffusion chamber, when actualized, results in an immense addition to the volumetric size of the catalytic converter itself.

The catalysts presently in popular use are mostly constructed by using a refractory oxide as the material for a carrier and forming a coating of a catalytically active component on the carrier. A few special catalysts use a metal for the carrier. In any event, the carriers for these catalysts are invariably in the form of a honeycomb and, without reference to any particular kind of the catalyst, are inevitably liable to increase the back pressure.

This increase in the back pressure during the service of the catalytic device brings about a decrease in the output of the engine itself and exerts no small hindrance upon the motion of the automobile.

In recent years, owing to the trend of engines with greater output, the contents of HC, CO, and NOx in the exhaust gas are inclining upwardly and the stricter regulation on exhaust gas than the existing one is being put into practice. In the light of this fact, the desirability of further improving the catalyst in performance is finding growing recognition. In addition, for the sake of preventing the engine output from falling, the back pressure suffered to occur in the catalytic device must be repressed to the fullest possible extent.

An object of this invention, therefore, is to provide a method for the purification of the exhaust gas from an internal combustion engine and an apparatus to be used therefor.

Another object of this invention is to provide a method for the purification of the exhaust gas from an internal combustion engine which refrains from increasing back pressure, enables the catalyst to start manifesting its performance fully while the temperature of the exhaust gas is still low immediately after the start of the engine, raises no problem about the space for installation of the apparatus for working the method, and operates at a low cost and an apparatus to be used therefor.

SUMMARY OF THE INVENTION

These objects are accomplished by a method for the purification of the exhaust gas, which comprises flowing the exhaust gas through a catalytic system constructed by disposing on the exhaust gas inlet side a first catalyst having a catalytic substance carried on at least one metallic substrate selected from the group consisting of metal nets and perforated metal sheets and on the exhaust gas outlet side a second catalyst having a catalytic substance carried on a honeycomb shaped monolithic carrier.

These objects are further accomplished by an apparatus for the purification of the exhaust gas, which apparatus is constructed by disposing on the exhaust gas inlet side a first catalyst having a catalytic substance carried on at least one metallic substrate selected from the group consisting of metal nets and perforated metal sheets and on the exhaust gas outlet side a second catalyst having a catalytic substance carried on a honeycomb shaped monolithic carrier.

In accordance with the present invention, by disposing on the exhaust gas inlet side the first catalyst having a catalytic substance carried on a metallic carrier obtained by reticulating or perforating a metal sheet possessing higher thermal conductivity than ceramics and shaping the processed metal sheet in conformity with the shape of an exhaust pipe and on the exhaust gas outlet side the second catalyst having a catalytic substance carried on a honeycomb shaped monolithic carrier, the performance for purification of the exhaust gas is improved, the back pressure is suppressed, and the action of purification is fully manifested even while the temperature of the exhaust gas is still low immediately after the start of the engine. Thus, the method of this invention excels the conventional method.

BRIEF DESCRIPTION OF THE DRAWINGS

Fig. 1 is a schematic cross section of an apparatus for the purification of the exhaust gas from an internal combustion engine according with the present invention,
Fig. 2A to 2H are schematic cross sections of packed first catalyst of the present invention,
Fig. 3 is an electron micrograph illustrating the metallurgical texture of the surface of a substrate produced after treating an untreated substrate with an aqueous 0.1 mol% sulfuric acid solution for one hour and then firing the treated substrate in the open air at 930°C for two hours,
Fig. 4 is an electron micrograph illustrating the metallurgical texture of the surface of the untreated substrate,
Fig. 5 is an electron micrograph illustrating the metallurgical texture of the surface of the substrate produced after treating the untreated substrate with an aqueous 0.1 mol% sulfuric acid solution for one hour,
Fig. 6 and Fig. 7 are electron micrographs illustrating the metallurgical texture of the substrate produced after firing the substrate in the open air at 930°C for two hours,
Fig. 8 and Fig. 9 are graphs showing patterns of purification of hydrocarbon in the mode depicting the results of experiment performed in accordance with the present invention, and
Fig. 10 and Fig. 11 are graphs showing patterns of purification of hydrocarbon in the mode depicting the results of an experiment performed for comparison.

EXPLANATION OF THE PREFERRED EMBODIMENT

As the material for the reticulated and/or perforated metal carrier to be used in the first catalyst on the exhaust gas inlet side, any of the refractory metals can be used. Since the surface of this catalyst is heated to a high temperature by the combustion of hydrocarbon or CO, a ferrite type stainless steel containing aluminum (Al) and chromium (Cr) is used to advantage as the material for the carrier. The contents of Al and Cr are preferable to be respectively in the ranges of 1 to 10% by weight and 5 to 30% by weight. This stainless steel may contain such rare earth elements as Y and Ce in a combined content in the range of 0.01 to 1% by weight.

The reticulated metal sheet is effectively usable on the condition that the linear diameter is in the range of 0.1 to 2.0 mm, preferably 0.15 to 1.8 mm, and the interval between the adjacent meshes is in the range of 0.3 to 10 mm, preferably 0.35 to 9.1 mm. For the perforated metal sheet, the shape of holes formed therein is irrevant. The circular holes function satisfactorily when their diameter is in the range of 0.3 to 10 mm, preferably 0.35 to 9.1 mm, and their pitch in the range of 15 to 0.4 mm, preferably 13 to 0.5 mm. The thickness of the sheet is preferable to be in the range of 0.05 to 1.5 mm, preferably 0.07 to 1.4 mm, in the light of strength and workability.

The open cross section of the first catalyst is above at least 85%, more preferable between 85 and 99.7%, and most preferably between 90 and 99%. If the open cross section is less than 85%, there arises the disadvantage that the back pressure is unduly high. When the open cross section is not less than 85% and, at the same time, a bulk volumetric ratio of a first catalyst to a second catalyst mentioned above is in the range of 0.1 to 4.0, the catalyst is not required to have any particularly specific shape but is allowed to assume an arbitrary shape such as a hexagon or a star, for example, in conformity with the inner wall of the exhaust pipe. The term "open cross section" as used herein refers to the packing cross-sectional area of the first catalyst relative to the flowing cross-sectional area of the exhaust gas inside the the converter such as, for example, the exhaust pipe which is packed with the catalyst.

As respects the shape of the reticulated or perforated metal sheet according with the present invention, the first catalyst on the exhaust gas inlet side possesses a shape conforming with the shape of the exhaust pipe because it is used as fitted intimately inside the exhaust pipe of the automobile. This shape may be selected from among cylinders, conical pyramids, and manifolds. The shaped catalyst is not always required to be a one-piece article but may be a combination of several parts. Instead of using the reticulated or perforated metal sheet in a single layer, a plurality of such reticulated or perforated sheets may be used in a stratified form.

For the second catalyst on the exhaust gas outlet side, a honeycomb shaped monolithic carrier is used. The material for this catalyst is selected from among such refractory substances as cordierite and mullite and metallic substances. The size of cells in the honeycomb is in the range of 200 to 600 cells (number of openings/square inch). The cross-sectional shape of such cells is selected from among triangles, rectangles, and hexagons, for example.

The catalytic substance to be carried in the second catalyst on the exhaust gas outlet side is similar to that in the first catalyst on the exhaust gas inlet side. The method for forming a coating of this catalytic substance on the carrier is the same as that used in the first catalyst.

The first catalyst to be used on the exhaust gas inlet side has the catalytic substance carried on the metallic substrate as described above. In this case, the surface of the metallic substrate destined to serve as the carrier is preferable to be coated with alumina. To be specific, the metallic substrate is preferable to be given the following treatment for the sake of enhancing the strength with which the metallic substrate carries the catalytic substance thereon.

As the first catalyst on the exhaust gas inlet side, a catalyst obtained by forming a coating of alumina on the surface of a metallic substrate and then forming a coating of a catalytic substance on the layer of alumina can be used. Otherwise, as the first catalyst on the exhaust gas inlet side, a catalyst produced by pickling a metallic substrate thereby forming micropores on the surface thereof and then forming a coating of a catalytic substance on the treated surface of the metallic substrate may be used.

In the production of the first catalyst on the exhaust gas inlet side, the catalyst may be completed after the surface of the metallic substrate has been treated with an acid. The acids which are effectively usable herein include sulfuric acid, hydrochloric acid, and nitric acid, for example. Such an acid is used as diluted with water. The acid concentration in the aqueous solution is preferable to be in the range of 0.01 to 5 mol%, preferably 0.02 to 4.5 mol%. By this treatment, micropores can be formed on the reticulated or perforated metallic sheet as the carrier.

The micropores are preferable to have a diameter in the range of 50 to 0.1 μm.

The duration of this acid treatment is preferable to be in the range of one minute to four hours. Consequently, stable micropores measuring 50 to 0.1 μm can be formed and, moreover, the corrosion of the substrate can be minimized. When sulfuric acid is used for the treatment, since it is most corrosive, the treatment is allowed to give better results by using the acid in a lower concentration and performing the treatment for a longer time. When nitric acid is used for the treatment, it is preferable to shorten the duration of the treatment by heightening the acid concentration. The treatment with hydrochloric acid is allowed to produce desired micropores under the conditions intermediate between the two sets of conditions mentioned above.

The surface of the metallic substrate may be coated with the catalytic substance after it has been coated with alumina. The methods which are available for this formation of alumina will be cited below.

(1) A method which comprises chemically applying a coating of alumina on the substrate by the CVD (chemical vapor deposition) process.

(2) A method which comprises plating the substrate with aluminum and then heating the applied film of alumina thereby converting the aluminum into alumina.

(3) A method which comprises heating a stainless steel substrate thereby causing the aluminum contained in the substrate to be converted into a coating of alumina deposited on the surface of the substrate.

Optionally, the aforementioned acid treatment may be used in combination with the treatment for the formation of alumina.

It has been confirmed by the surface analysis with a scanning electron microscope (SEM) that when an aluminum-containing stainless steel is treated with an acid and then heat-treated at a temperature in the range of 800° to 1,000°C, alumina whiskers or an alumina sheet is formed on the surface thereof and grooves or micropores measuring 50 to 0.1 μm in diameter are formed thereon at the same time.

As the second method for enhancing the strength of the carrier in retaining the deposited catalytic substance, the carrier is preferable to be treated as follows. In the case of the first catalyst on the exhaust gas inlet side, the metallic substrate is given a surface treatment with a solution of a tetravalent cerium salt and then a coating of the catalytic substance is superposed fast on the treated surface of the metallic substrate. The solutions of tetravalent cerium salts which are effectively usable herein include those of sulfates, nitrates, acetates, and metasulfonates, for example.

These salts are variable to some extent with the kind of material used for the substrate subjected to the surface treatment. When the substrate of stainless steel having iron as its main component is to be coated with a refractory metal oxide, the salts which are used advantageously for enhancing the retaining strength include ceric sulfate and ceric nitrate.

The concentrations of these salts which fit the treatment are variable with the length of time spent for the surface treatment. The time of treatment is short when the salt is used in a high concentration and it is long when the salt is used in a low concentration. The length of the treating time and the concentration of the salt are also variable with the temperature of the solution of the salt. These conditions may be adjusted to suit the material of the metallic substrate, the kind of cerium salt, etc.

Typical examples of the method of this treatment will be cited below. The treatment may be practised otherwise without departing from the spirit of this invention.

(1) The formation of a coating of a refractory metal oxide on a metallic substrate is accomplished by defatting the metallic substrate, giving to the defatted metallic substrate a surface treatment as with a solution of a tetravalent cerium salt and a washing with water, either immersing the metallic substrate in a slurry or boehmite sol (optionally a boehmite-containing sol obtained by mixing the slurry with the boehmite sol) of a refractory metal oxide or applying the slurry or boehmite sol to the surface of the metallic substrate, and drying and calcining the wet metallic substrate.

The catalyst is completed by immersing the metallic substrate as coated with the refractory metal oxide in a solution containing a catalytically active component and drying and calcining the wet coated metallic substrate.

(2) The catalyst is produced by defatting a metallic substrate, giving to the defatted metallic substrate a surface treatment as with a solution of a tetravalent cerium salt and a washing with water, either immersing the metallic substrate in a slurry of a refractory metal oxide having a catalytically active component deposited fast thereon in advance or applying this slurry to the metallic substrate, and drying and calcining the wet metallic substrate.

(3) The catalyst is produced by defatting a metallic substrate, giving to the defatted metallic substrate a surface treatment as with a solution of a tetravalent cerium salt and a washing with water, either immersing the surface-treated metallic substrate in or coating it with a slurry obtained by mixing a solution of a catalytically active component with a refractory metal oxide and finely pulverizing the resultant mixture by a wet process, and drying and calcining the wet metallic substrate.

The treatment performed as described above may be followed by an additional treatment for the formation of alumina. This additional treatment is carried out as already described.

The catalytic substance for the first catalyst on the exhaust gas inlet side may be what is composed of at least one noble metal selected from the group consisting of platinum, rhodium, and palladium and a refractory inorganic oxide. The at least one noble metal selected from the group consisting of platinum, rhodium, and palladium, preferably platinum and/or palladium is used generally as deposited on the refractory inorganic oxide. The amount of the catalytic substance to be used is preferable to be in the range of 0.1 to 2.0 g, preferably 0.2 to 1.5 g, per 100 cm² of the surface area of the reticulated or perforated metallic sheet. If this amount is less than 0.1 g, the produced catalyst fails to acquire the stated catalytic activity. Conversely, if this amount exceeds 2.0 g, though the produced catalyst acquires an improvement in the catalytic activity, this improvement is not proportionate to the excess amount used. This excess amount brings about the disadvantage that it simply increases the total consumption of a noble metal in the first and second catalysts.

The refractory inorganic oxides which are effectively usable herein include alumina, silica, and zirconia, for example. For the present invention, an activated alumina in the γ, δ, or θ crystal form is used to advantage among other refractory inorganic oxides. By the use of an activated alumina stabilized with an alkaline earth metal or a rare earth metal and further by the incorporation of such a co-catalyst component as nickel, iron, cerium, lanthanum, or zirconium, the catalysts of the present invention are improved in performance.

Preferably, the refractory inorganic oxide is used in an amount in the range of 0.1 to 2.0 g, preferably 0.2 to 1.5 g, per 100 cm² of the surface of a reticulated or perforated metallic sheet in coating the metallic sheet. If this amount is less than 0.1 g, the amount of the noble metal to be carried is proportionately decreased and consequently the catalytic activity is lowered. Conversely, if the amount exceeds 2.0 g, though the catalytic activity is improved, there arises the disadvantage that the deposition of the refractory inorganic oxide possibly requires the coating step to be repeated a plurality of times and renders the deposited catalytic substance readily separable.

The methods which are generally employed for coating the metallic substrate with the catalytic substance include, for example :

(1) A method which comprises coating the metallic substrate with a sol of the refractory inorganic oxide or a colloidal slurry obtained by wet pulverizing the refractory inorganic oxide, immersing the coated refractory inorganic oxide in a solution containing the noble metal in a stated concentration, and then drying and calcining the wet coated refractory inorganic oxide.

(2) A method which comprises preparatorily depositing the noble metal on the refractory inorganic oxide, subjecting the refractory inorganic oxide in the ensuant state to wet pulverization thereby forming a colloidal silica, and coating the metallic substrate with the colloidal silica.

The method for coating the metallic substrate with the noble metal and the refractory inorganic oxide is to be suitably selected with due consideration to the convenience of the step of catalyst preparation.

The catalytic substance to be used for the second catalyst on the exhaust gas outlet side may be what is composed of at least one noble metal selected from the group consisting of platinum, palladium, and rhodium and a refractory inorganic oxide.

The methods which are available for the preparation of a three way catalyst which is to be used as the second catalyst herein, for example, include :

(1) A method which comprises wet pulverizing activated alumina and cerium oxide thereby forming a slurry, coating a honeycomb-shaped monolithic carrier with the slurry, immersing the coated monolithic carrier in an aqueous solution of the aforementioned noble metal compound such as, for example, a compound of platinum or rhodium, and then drying and calcining the wet monolithic carrier.

(2) A method which comprises depositing the aforementioned noble metal such as, for example, palladium or rhodium, on activated alumina, wet pulverizing the resultant composite mass in conjunction with cerium oxide thereby forming a slurry, and coating a honeycomb-shaped monolithic carrier with the slurry.

Any of various other methods available for the preparation of a three way catalyst may be adopted without departing from the spirit of this invention.

The catalytic substance to be used for the second catalyst on the exhaust gas outlet side is similar to that for the first catalyst on the exhaust gas inlet side and the method employed for the deposition of this catalytic substance is also similar to that for the first catalyst. The amount of the refractory inorganic oxide to be deposited is in the range of 10 to 80 % by weight, preferably 12 to 78 % by weight, based on the amount of the monolithic carrier. The amount of the noble metal in the range of 0.02 to 1.11 % by weight, preferably 0.03 to 0.56 % by weight, based on the amount of the monolithic carrier, and the amount of cerium oxide is in the range of 0 to 32 % by weight, preferably 1 to 27% by weight, based on the amount of the monolithic carrier.

Preferably, a catalyst containing platinum or palladium is generally used for the exclusive removal of hydrocarbon or carbon monoxide and a three way catalyst for the simultaneous removal of hydrocarbon, carbon monoxide, and nitrogen oxides.

When the volume to be occupied in the space by the reticulated or perforated metallic sheet shaped so as to serve as the carrier for the catalyst on the exhaust gas inlet side constitutes itself the bulk volume of the first catalyst on the exhaust gas inlet side, the bulk volumetric ratio of the first catalyst on the exhaust gas inlet side to the second catalyst on the exhaust gas outlet side is in the range of 0.1 to 4.0, preferably 0.15 to 3.8. If this ratio is less than 0.1, the ability to purge the exhaust gas of hydrocarbon or CO is poor at low temperatures, the heat of combustion of hydrocarbon or CO is not fully obtained, and the catalyst on the exhaust gas outlet side is not allowed to manifest its properties fully. Conversely, if this ratio exceeds 4.0, though the catalyst fully manifests its properties, the first catalyst on the exhaust gas inlet side only has such a limited space for its installation that it cannot be adequately used.

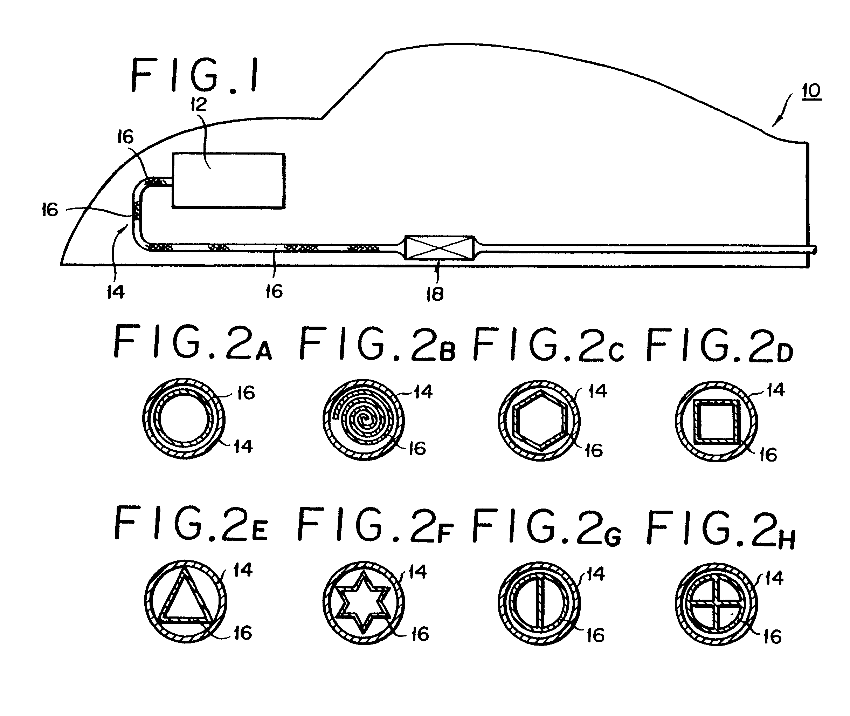

The catalyst system which is constructed as described above is used, for example, as a catalyst converter laid out as illustrated in Fig. 1. An exhaust pipe 14 communicating with an engine 12 of an automobile 10 is packed with a first catalyst 16 and a main converter 18 communicating with the exhaust pipe 14 is packed with a second catalyst 20.

The packing shape of the first catalyst is arbitrary. For example, the first catalyst having any of the cross-sectional shapes including a circle (Fig. 2A), a spiral (Fig. 2B), a hexagon (Fig. 2C), a rectangle (Fig. 2D), a triangle (Fig. 2E), a star (Fig. 2F), a circled vertical line segment (Fig. 2G), and a circled cruciform (Fig. 2H) is laid along the inner surface of the exhaust pipe 14.

Now, the present invention will be described more specifically below with reference to working examples. Naturally, this invention is not limited to these examples.

Example 1

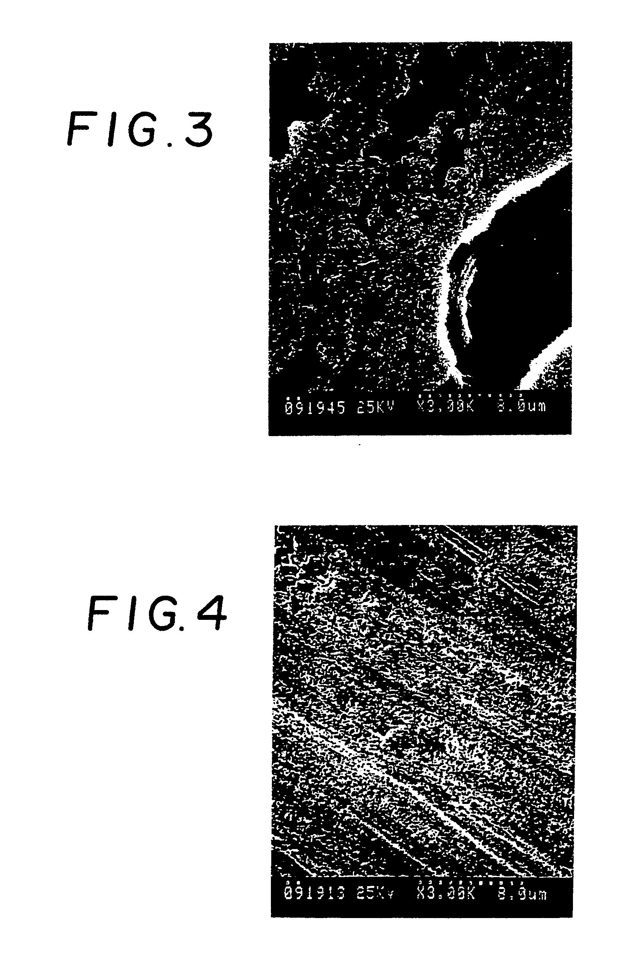

A metal net (200 mm in width x 300 mm in length, 22 mesh, linear diameter 0.35 mm) made of an aluminum-containing stainless steel (Fig. 4) (5 Al : 20 Cr : 75 Fe) was immersed for one hour in an aqueous solution of 0.1 mol% of sulfuric acid at a solution temperature of 25°C by way of acid treatment, washed with water, and dried.

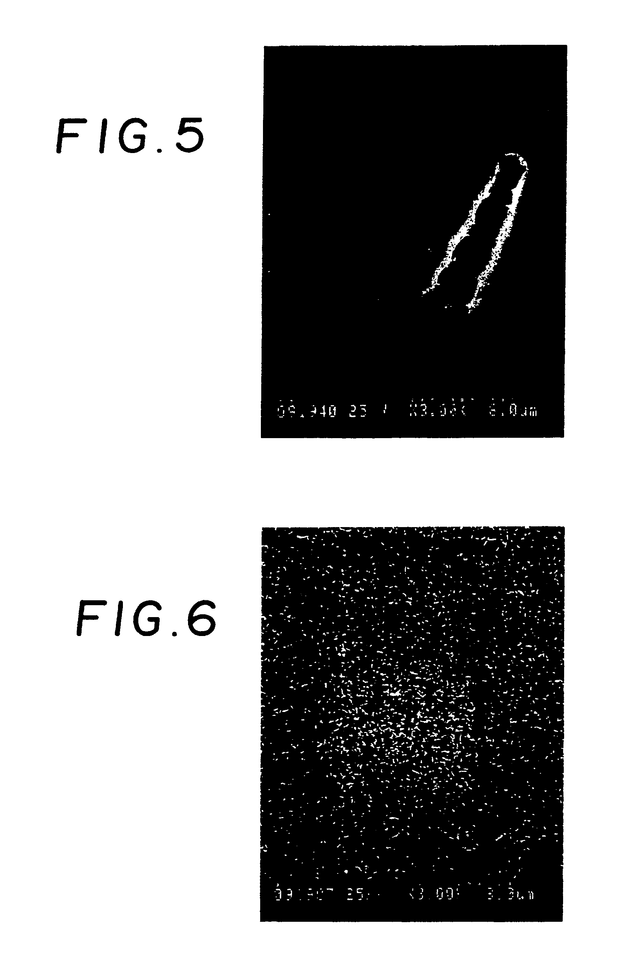

When the metallurgical texture of the treated surface of the metallic net was observed under a scanning electron microscope (SEM), it was found to have formed grooves measuring 50 to 2 μm in length and 5 to 1 μm in width therein (Fig. 5).

Then, the treated metal net was calcined in the open air at 930°C for two hours so as to form alumina whiskers thereon. When the metallurgical texture of the resultant surface of the metal net was observed under the SEM, it was found to have formed whiskers along the peripheries of the grooves mentioned above (Fig. 3).

The metal net carrier was immersed for one minute in an activated alumina slurry (having a solids content of 30%) and removed from the slurry and exposed to a current of compressed air to expel excess slurry. It was then dried in a drier at 200°C for 10 hours and fired at 600°C for two hours to obtain an alumina-deposited carrier. The amount of alumina deposited on the carrier was 2.82 g.

Then, the alumina-deposited carrier was immersed for 10 seconds in a palladium nitrate solution (having a palladium content of 100 g/liter) and exposed to a current of compressed air to expel excess solution. It was subsequently dried in a drier at 200°C for five hours and fired at 500°C for two hours to deposit palladium fast thereon. The amount of palladium deposited was 0.32 g.

The alumina-deposited carrier having palladium deposited fast thereon was immersed for 10 seconds in a platinum nitrate solution (having a platinum content of 100 g/liter) and exposed to a current of compressed air to expel excess solution. Then, it was dried in a drier at 200°C for five hours and fired at 600°C for two hours to obtain a complete catalyst. The amount of platinum deposited was 0.64 g.

## Example 2

A perforated metal sheet having holes 2 mm in diameter formed at a pitch of 3 mm in a sheet (200 mm in width x 300 mm in length x 0.05 mm in thickness) made of aluminum-containing ferrite stainless steel (5Al : 20 Cr : 75 Fe) was immersed for one hour in an aqueous solution of 1 mol% of nitric acid at a solution temperature of 25°C by way of acid treatment, washed with water, and dried. The dried perforated metallic sheet was calcined in the open air at 930°C for two hours so as to form whiskers thereon. The perforated metal sheet was immersed for one minute in a slurry of activated alumina having palladium carried in advance thereon as a catalytic component (having a solids content of 30%), removed from the slurry, exposed to a current of compressed air to expel excess slurry. It was then dried in a drier at 200°C for five hours and calcined at 600°C for two hours to obtain a complete catalyst. The total amount of the catalytic substances deposited was 3.11 g. The amount of palladium, among other catalytic substances, deposited was 0.81 g.

## Example 3

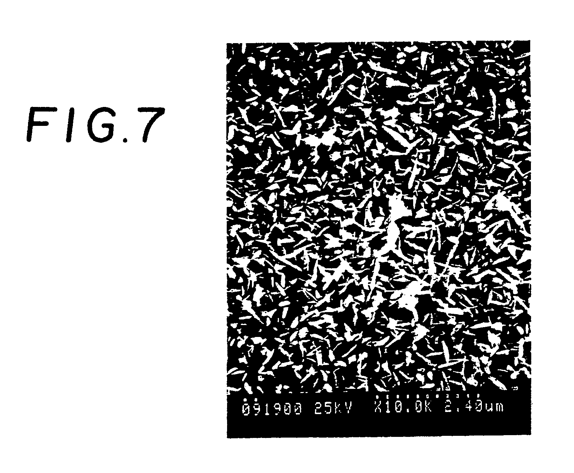

A catalyst was obtained by following the procedure of Example 1, except that the acid treatment was omitted and whiskers were formed (Fig. 6 and Fig. 7). In this catalyst were deposited 2.73 g of alumina, 0.31 g of palladium, and 0.63 g of platinum.

## Example 4

A catalyst was obtained by following the procedure of Example 2, except that the acid treatment was omitted. In this catalyst were deposited 2.18 g of aluminum and 0.77 g of palladium.

## Example 5

The same metallic net as used in Example 1 was defatted by one minute's immersion in a 1,1,1-trichloroethane solvent and then surface-treated by two hours' immersion in a ceric sulfate solution (containing 0.15 mol of Ce and 1 mol of $H_2SO_4$ per liter). The metal net was removed from the ceric sulfate solution, washed with deionized water, dried at 200°C for three hours, and subjected to a treatment for deposition of activated alumina, palladium, and platinum in the same manner as in Example 1. In the produced catalyst were deposited 2.83 g of activated alumina, 0.32 g of palladium, and 0.65 g of platinum.

## Control 1

A honeycomb-shaped carrier (76 mm in diameter x 88 mm in length, 400 cells, 6 mil (inch/1,000), about 400 cc) of cordierite was immersed for one minute in a slurry of alumina having palladium deposited in advance thereon (solids content 37%), then removed therefrom, and exposed to a current of compressed air to expel excess slurry. It was subsequently dried with hot air at 120°C for five hours and calcined at 600°C for two hours to obtain a complete catalyst. The total amount of catalytic substances deposited in the completed catalyst was 47.9 g. The amount of palladium, among other catalytic substances, deposited was 0.9 g.

Control 2

The catalyst obtained in Example 1 was fabricated in the shape of a cylinder measuring 25 mm in outside diameter and 200 mm in length. The volume was 0.098 liter.

Example 6

The catalysts obtained in Examples 1 to 5 (triangle shaped in cross section as shown in Fig. 2E) and Controls 1 and 2 (Circle shaped in cross section) were severally used as a first catalyst on the exhaust gas inlet side.

The first catalyst of the kind produced in Examples 1 to 5 and Control 2 using a metallic carrier was inserted in a manifold pipe of an engine exhaust 48 mm in inside diameter and fixed thereto by spot welding, whereas the first catalyst produced in Control 1 was placed in a converter and disposed so as to assume the same position as that in Examples 1 to 5 and Control 2.

Conditions for determination of ability to purify exhaust gas :
Second catalyst on exhaust gas outlet side : three way catalyst
Ceramic catalyst :
Amount of noble metal deposited 1.41 g/liter of catalyst, ratio of Pt to Rh 5 : 1
Volume of catalyst 1.7 liters
Number of cells 400
Durability required
100 hours at catalyst outlet
temperature of 850°C
Automobile used : Engine 1809 cc in capacity
Method of determination : LA-4 mode

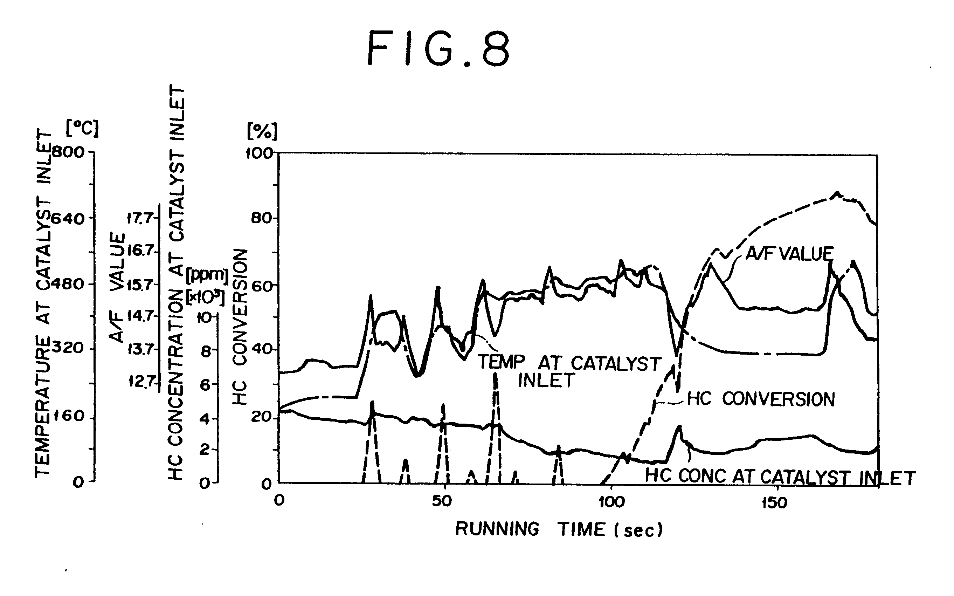

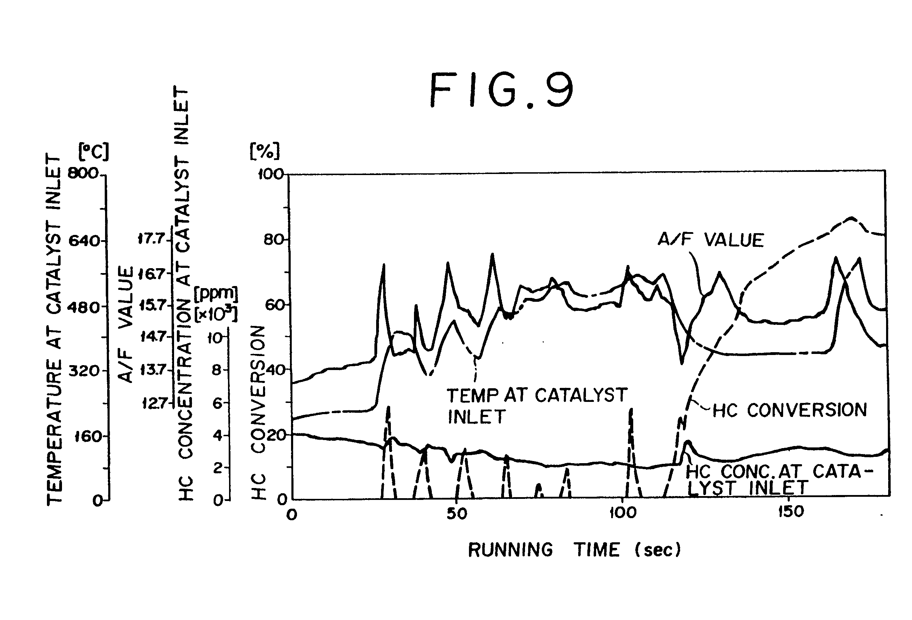

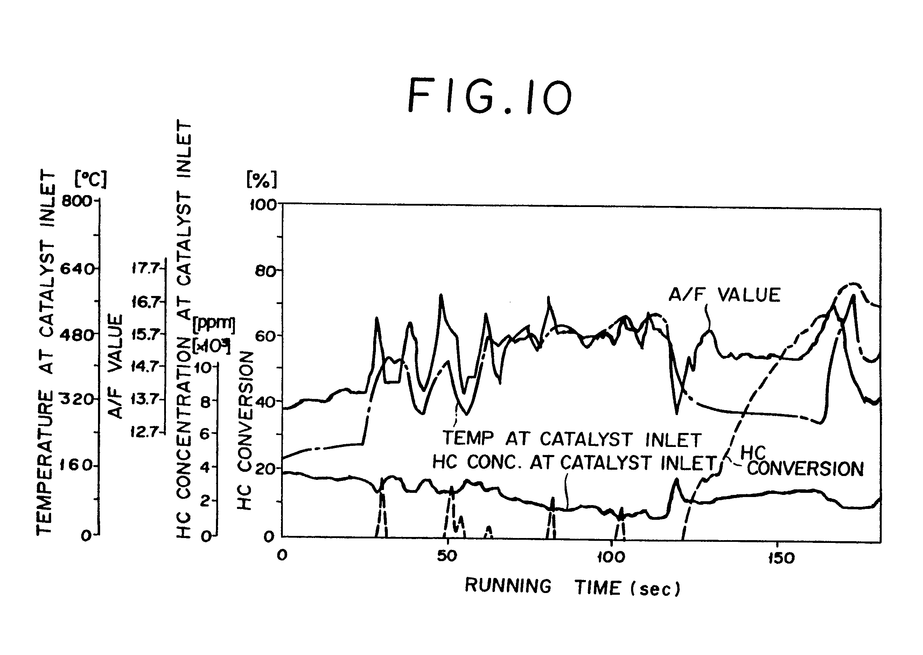

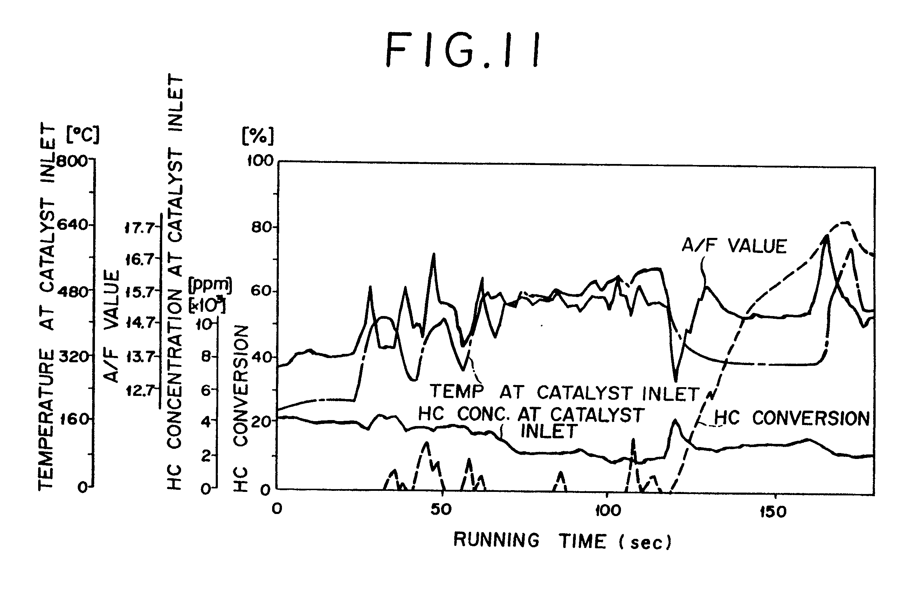

The purified gas was sampled at the outlet of the second catalyst and analyzed for CO, hydrocarbon (HC), and NOx. The combinations of the catalysts on the exhaust gas inlet side and outlet side and the results of the analysis are shown in Table 1. In Figs. 8 to 11, the changes of catalyst inlet A/F (air/fuel) value, catalyst inlet temperature, HC concentration, and second catalyst (b) outlet HC conversion determined over the period of 170 seconds following the start of the engine by the LA-4 mode test with respect to the catalyst combinations, No. I, II, i, and ii.

Example 7

The same catalyst combinations as used in Example 6 were tested for back pressure under the following conditions. The results are shown in Table 2.
Amount of air : 2 Nm³/min. 20°C

Table 1

| Combination No. | First catalyst on exhaust gas inlet side (A) | | | | Second catalyst on exhaust gas outlet side (B) | CO ** (g/mile) | HC ** (g/mile) | NOx ** (g/mile) | Bulk volumetric ratio of catalysts on inlet side/ outlet side |
| | Origin | Noble metal (g/PC) * | | Volume (ℓ) | | | | | |
| | | Pd | Pt | | | | | | |
| I | Example 1 | 03.2 | 0.64 | 0.5 | (b) | 2.60 | 0.331 | 0.314 | 0.3/1 |
| II | Example 2 | 0.81 | — | 0.5 | (b) | 2.70 | 0.376 | 0.325 | 0.3/1 |
| III | Example 3 | 0.31 | 0.63 | 0.5 | (b) | 2.52 | 0.346 | 0.293 | 0.3/1 |
| IV | Example 4 | 0.77 | — | 0.5 | (b) | 2.77 | 0.383 | 0.340 | 0.3/1 |
| V | Example 5 | 0.32 | 0.65 | 0.5 | (b) | 2.24 | 0.333 | 0.311 | 0.3/1 |
| i | — | — | — | 0.5 | (b) | 3.14 | 0.441 | 0.383 | 0.3/1 |
| ii | Control 1 | 0.9 | — | 0.5 | (b) | 3.02 | 0.423 | 0.342 | 0.3/1 |
| iii | Control 2 | 0.32 | 0.64 | 0.098 | (b) | 2.96 | 0.401 | 0.340 | 0.06/1 |

EP 0 441 062 A1

Table 2

| Combination | Catalyst | | Back pressure | Opening ratio of catalyst on exhaust gas inlet side (%) |
|---|---|---|---|---|
| No. | Exhaust gas inlet side | Exhaust gas outlet side | (mmH$_2$O) | |
| I | Example 1 | (b) | 75 | 98 |
| II | Example 2 | (b) | 78 | 95 |
| III | Example 3 | (b) | 74 | 98 |
| IV | Example 4 | (b) | 78 | 95 |
| V | Example 5 | (b) | 75 | 98 |
| i | — | (b) | 70 | — |
| ii | Control 1 | (b) | 205 | 60 |
| iii | Control 2 | (b) | 110 | 79 |

Example 8

Three complete catalysts were obtained by following the procedure of Example 1, except that the amounts of palladium and platinum were changed respectively to 0.11 g and 0.21 g. These catalysts were fabricated so as to assume a volume of 1.5 liters. In these catalysts were deposited 0.33 g of Pd and 0.64 g of Pt each.

Example 9

Thirteen complete catalysts were obtained in the same shape as in Example 1 by following the procedure of Example 1, except that the amounts of palladium and platinum deposited were changed respectively to 0.025 g of 0.049 g. These catalysts were fabricated so as to assume a volume of 6.3 liters. In these shaped catalysts were deposited 0.33 g of palladium and 0.64 g of platinum.

Control 3

A complete catalyst was obtained by following the procedure of Example 1, except that the size of the metal net was changed to 200 mm in width and 150 mm in length. This catalyst was fabricated so as to assume a volume of 0.1 liter (outer diameter 48 mm and length 55 mm). In this catalyst were deposited 0.31 g of Pd and 0.63 g of Pt.

Example 10

The shaped catalysts obtained in Examples 1, 8, and 9 and Control 3 and the second catalyst used in Example 6 were severally attached fast to the engine exhaust in the same manner as in Example 6 and tested for ability to purify the exhaust gas. The results are shown in Table 3. The second catalysts on the exhaust gas outlet side alone were subjected to the same test as described above. The results are shown in Table 3.

Table 3

| Combination No. | First catalyst on exhaust gas inlet side (A) | | | | Second catalyst on exhaust gas outlet side (B) | | | CO ** (g/mile) | HC ** (g/mile) | NOx ** (g/mile) | Bulk volumetric ratio of catalysts on inlet side/ outlet side |
|---|---|---|---|---|---|---|---|---|---|---|---|
| | Origin | Noble metal (g/PC) * | | Volume (ℓ) | Noble metal (g/PC) * | | Volume (ℓ) | | | | |
| | | Pd | Pt | | Pt | Rh | | | | | |
| I | Example 1 | 0.32 | 0.64 | 0.5 | 2.00 | 0.40 | 1.7 | 2.64 | 0.331 | 0.314 | 0.3/1 |
| VI | Example 8 | 0.33 | 0.63 | 1.5 | 2.00 | 0.40 | 1.7 | 2.08 | 0.309 | 0.297 | 0.9/1 |
| VII | Example 9 | 0.33 | 0.64 | 6.3 | 2.00 | 0.40 | 1.7 | 1.88 | 0.243 | 0.282 | 3.7/1 |
| iii | Control 3 | 0.31 | 0.63 | 0.1 | 2.00 | 0.40 | 1.7 | 3.05 | 0.428 | 0.356 | 0.06/1 |
| i | — | — | — | — | 2.00 | 0.40 | 1.7 | 3.14 | 0.441 | 0.383 | -/1 |

\*     Weight (g) of noble metal deposited on first catalyst on exhaust gas inlet side or second catalyst on exhaust gas outlet side.

\*\*     Amount (g) of indicated pollutant discharged per mile of automobile travel.

EP 0 441 062 A1

## Claims

1. A method for the purification of the exhaust gas, which comprises passing the exhaust gas through a catalytic system having disposed on the exhaust gas inlet side a first catalyst produced by depositing a catalytic substance on at least one metallic substrate selected from the group consisting of metal nets and perforated metal sheets and on the exhaust gas outlet side a second catalyst produced by depositing a catalytic substance on a honeycomb shaped monolithic carrier.

2. A method according to claim 1, wherein a bulk volumeric ratio of said first catalyst to said second catalyst is in the range of 0.1 to 4.0.

3. A method according to claim 1, wherein an open cross section of said first catalyst is not less than 85%.

4. A method according to claim 1, wherein said first catalyst on the exhaust gas inlet side is produced by forming an alumina layer on the surface of said metallic substrate and then coating said alumina layer with said catalytic substance.

5. A method according to claim 1, wherein said first catalyst is produced by acid-treating said metallic substrate thereby forming micropores on the surface thereof and then depositing said catalytic substance on the acid-treated surface of said metallic substrate.

6. A method according to claim 1, wherein said first catalyst is produced by acid-treating said metallic substrate thereby forming microprores thereon, forming an alumina layer on the surface of said metallic substrate, and thereafter depositing said catalytic substance on said alumina layer.

7. A method according to claim 5, wherein said micropores have diameters in the range of 50 to 0.1 $\mu$m.

8. A method according to claim 5, wherein said acid is a solution of sulfuric acid, hydrochloric acid or nitric acid and the concentration thereof is in the range of 0.01 to 5 mol%.

9. A method according to claim 4, wherein said alumina formed on the surface is in the form of whiskers.

10. A method according to claim 1, wherein said first catalyst is produced by surface-treating said metallic substrate with a tetravalent cerium salt solution and then depositing said catalytic substance on the treated part of said metallic substrate.

11. A method according to claim 1, wherein said first catalyst is produced by surface-treating said metallic substrate with a tetravalent cerium salt solution, forming an alumina layer on the treated surface, and then depositing said catalytic substance on said alumina layer.

12. A method according to claim 10, wherein said tetravalent cerium salt solution is an aqueous solution of a sulfate or a nitrate.

13. A method according to claim 1, wherein the catalytic substance of said first catalyst comprises a refractory inorganic oxide and at least one noble metal selected from the group consisting of platinum, palladium, and rhodium.

14. A method according to claim 1, wherein the catalytic substance for said second catalyst on the exhaust gas outlet side comprises a refractory inorganic oxide and at least one noble metal selected from the group consisting of platinum, palladium, and rhodium.

15. A method according to claim 1, wherein the volumetric ratio of said first catalyst to said second catalyst is in the range of 0.15 to 3.8.

16. A method according to claim 15, wherein the open cross section of said first catalyst is in the range of 85 to 99.7%.

17. An apparatus provided with a plurality of catalysts for the purification of the exhaust gas, which apparatus has disposed on the exhaust gas inlet side a first catalyst produced by depositing a catalytic substance on at least one metallic substrate selected from the group consisting of metal nets and perforated metal sheets and on the exhaust gas outlet side a second catalyst produced by depositing a catalytic substance on a honeycomb shaped monolithic carrier.

18. An apparatus according to claim 17, wherein a bulk volumetric ratio of said first catalyst to said second catalyst is in the range of 0.1 to 4.0.

19. An apparatus according to claim 17, wherein an open cross section of said first catalyst at a value of not less than 85%.

20. An apparatus according to claim 17, wherein said first catalyst is placed in the exhaust pipe of an engine and said second catalyst is the main converter which is connected to the exhaust pipe.

21. An apparatus according to claim 17, wherein said bulk volumetric ratio of said first catalyst to said second catalyst is in the range of 0.15 to 3.8.

FIG.1

FIG.2A  FIG.2B  FIG.2C  FIG.2D

FIG.2E  FIG.2F  FIG.2G  FIG.2H

EP 0 441 062 A1

## FIG.3

## FIG.4

FIG.5

FIG.6

# FIG.7

091900 25KV X10.0K 2.40um

# FIG.8

EP 0 441 062 A1

# FIG.9

FIG.10

FIG.11

EP 0 441 062 A1